(19) Europäisches Patentamt
European Patent Office
Office européen des brevets

(11) **EP 4 100 810 B1**

(12) ## EUROPÄISCHE PATENTSCHRIFT

(45) Veröffentlichungstag und Bekanntmachung des Hinweises auf die Patenterteilung:
**27.03.2024 Patentblatt 2024/13**

(21) Anmeldenummer: **21702589.9**

(22) Anmeldetag: **25.01.2021**

(51) Internationale Patentklassifikation (IPC):
***G05D 1/02*** (2020.01)

(52) Gemeinsame Patentklassifikation (CPC):
**G05D 1/0274**

(86) Internationale Anmeldenummer:
**PCT/EP2021/025027**

(87) Internationale Veröffentlichungsnummer:
**WO 2021/156000 (12.08.2021 Gazette 2021/32)**

(54) **VERFAHREN ZUM BETREIBEN EINER TECHNISCHEN ANLAGE**

METHOD FOR OPERATING AN INDUSTRIAL FACILITY

PROCÉDÉ POUR FAIRE FONCTIONNER UNE INSTALLATION TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2020 DE 102020000785**

(43) Veröffentlichungstag der Anmeldung:
**14.12.2022 Patentblatt 2022/50**

(73) Patentinhaber: **SEW-EURODRIVE GmbH & Co. KG**
**76646 Bruchsal (DE)**

(72) Erfinder:
• **FUNK, Johanna**
**75443 Ötisheim (DE)**
• **SLISKOVIC, Maja**
**76275 Ettlingen (DE)**

(56) Entgegenhaltungen:
**US-A1- 2004 122 590 US-B1- 6 453 233**

• **JULIA LINKE ET AL: "The influence of patch-delineation mismatches on multitemporal landscape pattern analysis", LANDSCAPE ECOLOGY, KLUWER ACADEMIC PUBLISHERS, DO, Bd. 24, Nr. 2, 5. November 2008 (2008-11-05), Seiten 157-170, XP019683500, ISSN: 1572-9761**
• **CORDELLA L P ET AL: "A (Sub)Graph Isomorphism Algorithm for Matching Large Graphs", IEEE TRANSACTIONS ON PATTERN ANALYSIS AND MACHINE INTELLIGENCE, IEEE COMPUTER SOCIETY, USA, Bd. 26, Nr. 10, 1. Oktober 2004 (2004-10-01), Seiten 1367-1372, XP011116543, ISSN: 0162-8828, DOI: 10.1109/TPAMI.2004.75**

**EP 4 100 810 B1**

**Beschreibung**

Die Erfindung betrifft ein Verfahren zum Betreiben einer technischen Anlage, welche mindestens ein mobiles System aufweist, wobei eine Karte der technischen Anlage erzeugt wird, welche Informationen über mindestens einen befahrbaren Bereich und mindestens einen gesperrten Bereich aufweist.

Bei der technischen Anlage handelt es sich insbesondere um eine industrielle Anwendung, beispielsweise ein Produktionswerk. Bei dem mobilen System der technischen Anlage handelt es sich beispielsweise um ein autonom fahrendes Fahrzeug. Das mobile System dient beispielsweise zum Transport von Gegenständen innerhalb der technischen Anlage. Von der technischen Anlage wird eine Karte erstellt, welche Informationen über von dem mobilen System befahrbare Bereiche und über für das mobile System gesperrte Bereiche aufweist. Die befahrbaren Bereiche der technischen Anlage umfassen Fahrwege, auf welchen sich das mobile System bewegen kann.

Aus dem Dokument DE 10 2019 001 253 A1 ist ein Verfahren zum Betreiben einer technischen Anlage bekannt, welche mindestens ein mobiles System aufweist, das auf einer Verkehrsfläche der technischen Anlage verfahrbar ist. Das mobile System erfasst mit Hilfe von entsprechenden Sensoren Objekte in der technischen Anlage. Die Positionen der so erfassten Objekte werden dabei mit vermuteten Positionen von Objekten gemäß einer Karte der technischen Anlage verglichen.

Weitere Verfahren zum Betreiben von technischen Anlagen mit mobilen Systemen, wobei Karten oder Landkarten von der technischen Anlage, erstellt werden, sind untern anderem aus den Dokumenten DE 10 2018 002 378 A1, DE 10 2018 009 114 A1, DE 10 2019 000 903 A1 bekannt.

Aus dem Dokument US 2010/0293517 A1 ist Verfahren zur Bildung einer Graphenstruktur zur Beschreibung einer Fläche mit einer Freifläche und einer Belegfläche bekannt. Die Graphenstruktur wird dabei aus einem Punkt einer topologischen Graphenstruktur und aus einer Ortsinformation eines nächstgelegenen Belegflächenpunktes gebildet.

Aus der US 2004/0122590 A1 ist ein System zum Evaluieren von Karten bekannt. Das System umfasst eine Datenbank, die eine Straßenkarte speichert. Das System erkennt Unterschiede zwischen einer gespeicherten Straßenkarte und einer neu aufgenommenen Karte.

Aus der US 6,453,233 B1 ist ein Verfahren zur Erstellung von Aktualisierungen von alten Kartendaten bekannt.

Der Artikel "PORTUGAL, David ROCHA, Rui P.: Retrieving Topological Information for Mobile Robots Provided with Grid Maps. In: Filipe J., Fred A. (eds) Agents and Artificial Intelligence. ICAART2012. Communications in Computer and Information Science, Bd. 358, 2013, Springer, Berlin, Heidelberg", URL: https://doi.org/10.1007 /978-3-642-36907-0 14, beschreibt ein Verfahren zur Extraktion von topologischen Karten für mobile Roboter.

Der Artikel "CORDELLA, Luigi P. [et al]: A (sub)graph isomorphism algorithm for matching large graphs. In IEEE Transactions on Pattern Analysis and Machine Intelligence, Bd. 26, 2004, H. 10, S. 1367-1372, 001: 10.1109/TPAMI.2004.75", URL: https:llieeexplore,ieee.org/stamp/stamp.jsp?tp=&arnumber=1323804, beschreibt einen Algorithmus zur Überlagerung von Graphen.

Der Artikel "JULIA LINKE ET AL: The influence of patch-delineation mismatches on multitemporal landscape pattern analysis", LANDSCAPE ECOLOGY, KLUWER ACADEMIC PUBLISHERS, DO, Bd. 24, Nr. 2, 5. November 2008 (2008-11-05), Seiten 157-170, XP019683500, ISSN: 1572-9761 beschreibt ein Verfahren zum Erstellen von Landkarten.

Bei der Planung einer technischen Anlage wird in der Regel mittels eines CAD-Systems eine Grundkarte der technischen Anlage erzeugt. Die Grundkarte weist Informationen über von dem mobilen System befahrbare Bereiche und über für das mobile System gesperrte Bereiche, sowie über geplante Fahrwege für die mobilen Systeme, auf. Häufig kommt es vor, dass die besagte technische Anlage abweichend von der Planung aufgebaut wird. Beispielsweise werden unbewegliche Objekte, welche für das mobile System gesperrte Bereiche darstellen, versetzt zu den dafür vorgesehenen Positionen aufgestellt. In diesem decken sich die von dem mobilen System real befahrbaren Bereiche nicht mit den mit dem CAD-System geplanten befahrbaren Bereichen.

Der Erfindung liegt die Aufgabe zugrunde, ein Verfahren zum Betreiben einer technischen Anlage weiterzubilden. Dabei sollen insbesondere Fehler in einer Grundkarte der technischen Anlage erkannt und korrigiert werden.

Die Aufgabe wird durch ein Verfahren zum Betreiben einer technischen Anlage mit den in. Anspruch 1 angegebenen Merkmalen gelöst. Vorteilhafte Ausgestaltungen und Weiterbildungen sind Gegenstand der Unteransprüche.

Es wird ein Verfahren zum Betreiben einer technischen Anlage, welche mindestens ein mobiles System aufweist, vorgeschlagen. Bei der technischen Anlage handelt es sich insbesondere um eine industrielle Anwendung, beispielsweise ein Produktionswerk. Bei dem mobilen System der technischen Anlage handelt es sich beispielsweise um ein autonom fahrendes Fahrzeug, welches zum Transport von Gegenständen innerhalb der technischen Anlage dient.

Gemäß dem erfindungsgemäßen Verfahren wird eine Grundkarte der technischen Anlage erzeugt, beispielsweise mittels eines CAD-Systems. Die Grundkarte weist dabei Informationen über mindestens einen von dem mobilen System befahrbaren Bereich und über mindestens einen für das mobile System gesperrten Bereich auf. Ferner wird eine Korrekturkarte der technischen Anlage erzeugt, welche ebenfalls Informationen über mindestens einen von dem mobilen System befahrbaren Bereich und über mindestens einen für das mobile System gesperrten Bereich aufweist. Die Korrekturkarte wird beispielsweise von einem mobilen System erzeugt, welches mittels entsprechender Sensoren unbewegliche Objekte in der technischen Anlage erfasst. Es ist auch denkbar, dass die Grundkarte von einem mobilen System erzeugt wird, welches mittels entsprechender Sensoren unbewegliche Objekte in der technischen Anlage erfasst. Die Korrekturkarte wird dann insbesondere von einem anderen mobilen System und/oder zu einem anderen Zeitpunkt und/oder mittels anderer Sensoren, beispielsweise in einer anderen Höhe, als die Grundkarte erzeugt.

Anschließend wird die erzeugte Grundkarte mit der erzeugten Korrekturkarte überlagert. Dabei werden in der Regel Ähnlichkeiten zwischen topologischen Merkmale der Grundkarte und entsprechenden topologischen Merkmalen der Korrekturkarte erkannt. Mindestens ein metrisches Merkmal der Grundkarte wird dabei durch ein metrisches Merkmal der Korrekturkarte ersetzt, wenn eine Abweichung zwischen einem metrischen Merkmal der Grundkarte und einem metrischen Merkmal der Korrekturkarte erkannt wird.

Der Erfindung liegt der Gedanke zugrunde, dass in der Regel die Grundkarte einen Soll-Zustand der technischen Anlage beschreibt, insbesondere Soll-Parameter der Fahrwege, wohingegen die Korrekturkarte einen Ist-Zustand der technischen Anlage beschreibt, insbesondere den Ist-Zustand der metrischen Karte. Es wird also davon ausgegangen, dass in der Regel die metrischen Merkmale der Korrekturkarte korrekt sind. Wenn Abweichungen in den metrischen Merkmalen zwischen der Grundkarte und der Korrekturkarte erkannt werden, so werden daher die metrischen Merkmale der Grundkarte als fehlerhaft angesehen.

Die Korrekturkarte hingegen ist in der Regel unvollständig und beschreibt nur einen Teil der technischen Anlage, welcher einem Ausschnitt der Grundkarte entspricht, und/oder enthält nicht alle Informationen, die für den Betrieb der technischen Anlage notwendig sind. Somit wäre es für den Betrieb der technischen Anlage nicht zielführend, die komplette Grundkarte durch die Korrekturkarte zu ersetzen.

Das erfindungsgemäße Verfahren gestattet, Fehler in einer Grundkarte der technischen Anlage zu erkennen und verhältnismäßig schnell zu korrigieren. insbesondere ist es möglich, die erkannten metrischen Fehler in der Grundkarte zu korrigieren. Insbesondere wird eine Korrektur der Grundkarte signifikant schneller durchgeführt, als wenn die Grundkarte manuell durch einen Mitarbeiter angepasst würde, was verhältnismäßig zeitaufwändig ist. Das erfindungsgemäße Verfahren ist dabei verhältnismäßig robust. Nach Anwendung des Verfahrens liegen aktualisierte Informationen über die technische Anlage vor, welche anschließend zur Navigation des mobilen Systems innerhalb der technischen Anlage verwendbar sind. Metrische Merkmale sind beispielsweise Längen, insbesondere Abstände zwischen Punkten, sowie Winkel. Metrische Merkmale sind insbesondere unabhängig von unterschiedlichen Maßstäben verschiedener Karten.

Erfindungsgemäß werden die Grundkarte und die Korrekturkarte jeweils in Form eines Graphen erzeugt, welcher den mindestens einen befahrbaren Bereich in der technischen Anlage beschreibt. Dabei umfasst der Graph mindestens einen ersten Knotenpunkt, einen zweiten Knotenpunkt und mindestens eine Verbindung zwischen dem ersten Knotenpunkt und dem zweiten Knotenpunkt als topologische Merkmale. Die Knotenpunkte sowie die Verbindung stellen also topologische Merkmale dar. Eine Verbindung des Graphen zwischen zwei Knotenpunkten weist dabei jeweils eine Verbindungsrichtung und eine Verbindungslänge auf.

Anschließend wird der Graph der Grundkarte mit dem Graphen der Korrekturkarte überlagert. Geeignete Verfahren zum Überlagern von Graphen sind beispielsweise aus dem Dokument "An Improved Algorithm for Matching Large Graphs", L. P. Cordella, P. Foggia, C. Sansone, M. Vento sowie aus dem Dokument "A (Sub)Graph Isomorphism Algorithm for Matching Large Graphs", Luigi P. Cordella, Pasquale Foggia, Carlo Sansone, and Mario Vento, IEEE TRANSACTIONS ON PATTERN ANALYSIS AND MACHINE INTELLIGENCE, VOL. 26, NO. 10, OCTOBER 2004 bekannt. Durch diese Überlagerung des Graphen der Grundkarte mit dem Graphen der Korrekturkarte entsteht eine Zuordnung der Knotenpunkte des Graphen der Korrekturkarte zu den Knotenpunkten des Graphen der Grundkarte. Dabei ist der Graph der Grundkarte beispielsweise ein Subgraph der Korrekturkarte. Damit ist entsprechend das Verfahren für die Überlagerung des Graphen der Grundkarte mit dem Subgraph der Korrekturkarte verwendbar. Anhand dieser Zuordnung sind topologische Merkmale der Grundkarte, insbesondere Knotenpunkte und Verbindungen, durch entsprechende topologische Merkmale der Korrekturkarte ersetzbar. Ebenso sind anhand dieser Zuordnung die ortsgebundenen Parameter sowie Eigenschaften der Grundkarte an die entsprechenden Stellen und geplanten Fahrwege der Korrekturkarte übertragbar.

Gemäß einer vorteilhaften Weiterbildung der Erfindung weist die Grundkarte der technischen Anlage Informationen über mindestens einen geplanten Fahrweg für das mindestens eine mobile System auf, und die Korrekturkarte der technischen Anlage weist Informationen über mindestens einen geplanten Fahrweg für das mindestens eine mobile System auf. Wenn die Grundkarte mit der Korrekturkarte überlagert wird, so wird mindestens ein Parameter des mindestens einen geplanten Fahrwegs der Grundkarte auf den entsprechenden geplanten Fahrweg der Korrekturkarte übertragen. Welcher Fahrweg in der Grundkarte welchem Fahrweg in der Korrekturkarte entspricht, wird durch Ähnlichkeiten zwischen topologischen Merkmale der Grundkarte und entsprechenden topologischen Merkmalen der Korrekturkarte erkannt.

Somit ist es möglich, ortsabhängige Parameter, insbesondere die Parameter der Fahrwege, verhältnismäßig schnell in die Korrekturkarte zu übertragen. Insbesondere wird eine Korrektur der Korrekturkarte signifikant schneller durchgeführt, als wenn die Korrekturkarte manuell durch einen Mitarbeiter angepasst würde, was verhältnismäßig zeitaufwändig ist.

Parameter des geplanten Fahrwegs sind beispielsweise eine Geschwindigkeit, ein einzuhaltender Abstand zu den Objekten links oder rechts von dem mobilen System, ein Typ des mobilen Systems, das diesen Fahrweg befahren darf, zeitliche Beschränkungen, die für diesen Fahrweg gültig sind, insbesondere ein Verbot des Fahrens auf diesem Fahrweg zu einer bestimmten Uhrzeit oder an einem bestimmten Wochentag.

Gemäß einer vorteilhaften Ausgestaltung der Erfindung werden bei der Überlagerung des Graphen der Grundkarte mit dem Graphen der Korrekturkarte die Verbindungslänge und die Differenz der Verbindungsrichtungen zwischen den entsprechenden Knotenpunkten verwendet. Dadurch wird die Genauigkeit bei der Überlagerung des Graphen der Grundkarte mit dem Graphen der Korrekturkarte vorteilhaft verbessert. Insbesondere ist die Überlagerung auch möglich, wenn die Grundkarte und die Korrekturkarte verschiedene Ausrichtungen haben, also gegeneinander rotiert sind. Das Verfahren wird somit rotationsinvariant und damit robuster.

Gemäß einer vorteilhaften Ausgestaltung der Erfindung umfasst das Verfahren nachfolgend genannte Schritte: Die Korrekturkarte und/oder die Grundkarte werden zunächst in Form einer ursprünglichen Rasterzellenkarte aufgenommen. Die ursprüngliche Rasterzellenkarte erstreckt sich dabei in einer Längsrichtung und in einer dazu rechtwinkligen Querrichtung. Die Längsrichtung und die Querrichtung definieren dabei ein zweidimensionales kartesisches Koordinatensystem. Die ursprüngliche Rasterzellenkarte weist eine Vielzahl von einzelnen Zellen auf. Diejenigen Zellen, welche den mindestens einen befahrbaren Bereich beschreiben, werden als frei gekennzeichnet, und diejenigen Zellen, welche den mindestens einen gesperrten Bereich beschreiben, werden als belegt gekennzeichnet. So bilden die freien Zellen mindestens einen freien Bereich, und die belegten Zellen bilden mindestens einen belegten Bereich.

Aus der ursprünglichen Rasterzellenkarte wird eine reduzierte Rasterzellenkarte erzeugt, indem diejenigen Zellen des mindestens einen freien Bereichs der ursprünglichen Rasterzellenkarte, deren Abstand in Längsrichtung und/oder in Querrichtung und/oder in Luftlinie zu mindestens einer Zelle des mindestens einen belegten Bereichs geringer als ein Sicherheitsabstand ist, als belegt gekennzeichnet werden. Der Sicherheitsabstand ist dabei nach vorgebbaren Kriterien wählbar. Insbesondere ist eine Breite des mobilen Systems bei der Wahl des Sicherheitsabstands zu berücksichtigen.

Anschließend wird eine Verdünnung des mindestens einen freien Bereichs der reduzierten Rasterzellenkarte durchgeführt, indem Zellen des mindestens einen freien Bereichs, welche in Längsrichtung und/oder in Querrichtung an mindestens einen belegten Bereich angrenzen, als belegt gekennzeichnet werden, bis der mindestens eine freie Bereich in Form eines Skeletts vorliegt, welches mindestens eine linienförmige Aneinanderreihung einzelner freier Zellen umfasst. Ein Verfahren zur Verdünnung eines Bereichs ist beispielsweise aus dem Dokument "A Fast Parallel Algorithm for Thinning Digital Patterns", T. Y. ZHANG and C. Y. SUEN, Communications of the ACM, March 1984, Volume 27, Number 3 bekannt.

Aus dem so erhaltenen Skelett des mindestens einen freien Bereichs wird anschließend der Graph der Korrekturkarte und/oder der Graph der Grundkarte erzeugt.

Alternativ ist es denkbar, insbesondere die Grundkarte der technischen Anlage gleich in Form eines Graphen zu erzeugen. Ebenso ist es denkbar, die Grundkarte in einer anderen Form zu erstellen und daraus den Graphen der Grundkarte zu erzeugen.

Gemäß einer vorteilhaften Weiterbildung der Erfindung wird vor dem Erzeugen des Graphen der Korrekturkarte und/oder der Grundkarte eine Glättung des Skeletts des mindestens einen freien Bereichs durchgeführt, indem Zellen des mindestens einen belegten Bereichs, welche in Längsrichtung und in Querrichtung an mindestens einen freien Bereich angrenzen, als frei gekennzeichnet werden, bis jede Zelle des freien Bereichs, welche in Diagonalrichtung an eine andere freie Zelle angrenzt, zusätzlich in Längsrichtung oder in Querrichtung an eine weitere freie Zelle angrenzt, welche, also die besagte weitere freie Zelle, in Längsrichtung oder in Querrichtung an die besagte andere freie Zelle angrenzt. Das Skelett des mindestens einen freien Bereichs umfasst somit freie Zellen, welche in Längsrichtung oder in Querrichtung aneinander angrenzen, aber nicht ausschließlich in Diagonalrichtung.

Vorteilhaft ist in der reduzierten Rasterzellenkarte mindestens ein Ladepunkt zum Laden des mindestens einen mobilen Systems vorgesehen. Beispielsweise handelt es sich bei dem Ladepunkt um eine induktive Ladespule, mittels welcher Energie induktiv zu einer Spule des mobilen Systems übertragbar ist. Die Verdünnung des mindestens einen freien Bereichs der reduzierten Rasterzellenkarte wird dabei derart durchgeführt, dass der mindestens eine Ladepunkt Teil des Skeletts ist.

Gemäß einer vorteilhaften Ausgestaltung der Erfindung umfasst der Graph mindestens einen Ladepunkt als Knotenpunkt. Ein Ladepunkt stellt also einen Knotenpunkt dar. Dabei wird der Graph erzeugt, indem für jeden der Ladepunkte Verbindungen zu anderen Knotenpunkten erfasst werden. Dabei umfasst eine derartige Verbindung eine Aneinanderreihung einzelner freier Zellen zwischen zwei Knotenpunkten. Zu jeder erfassten Verbindung werden jeweils eine Verbindungsrichtung und eine Verbindungslänge ermittelt.

Gemäß einer vorteilhaften Ausgestaltung der Erfindung umfasst der Graph mindestens einen Kreuzungspunkt als Knotenpunkt. Ein Kreuzungspunkt stellt also einen Knotenpunkt dar. Dabei wird der Graph erzeugt, indem diejenigen Zellen des mindestens einen freien Bereichs, welche in Längsrichtung sowie in Querrichtung an mindestens drei andere freie Zellen angrenzen, als Kreuzungspunkte gekennzeichnet werden. Ferner werden für jeden der Kreuzungspunkte Verbindungen zu anderen Knotenpunkten erfasst. Dabei umfasst eine derartige Verbindung eine Aneinanderreihung einzelner freier Zellen zwischen zwei Knotenpunkten. Zu jeder erfassten Verbindung werden jeweils eine Verbindungsrichtung und eine Verbindungslänge ermittelt.

Gemäß einer vorteilhaften Weiterbildung der Erfindung umfasst der Graph mindestens einen Endpunkt als Knotenpunkt. Ein Endpunkt stellt also einen Knotenpunkt dar. Dabei wird der Graph erzeugt, indem diejenigen Zellen des mindestens einen freien Bereichs, welche in Längsrichtung sowie in Querrichtung an genau eine freie Zelle angrenzen, als Endpunkte gekennzeichnet werden. Ferner werden für jeden der Endpunkte Verbindungen zu anderen Knotenpunkten erfasst. Dabei umfasst eine derartige Verbindung eine Aneinanderreihung einzelner freier Zellen zwischen zwei Knotenpunkten. Zu jeder erfassten Verbindung werden jeweils eine Verbindungsrichtung und eine Verbindungslänge ermittelt.

Gemäß einer vorteilhaften Weiterbildung der Erfindung umfasst der Graph mindestens einen Kurvenpunkt als Knotenpunkt. Ein Kurvenpunkt stellt also einen Knotenpunkt dar. Dabei wird der Graph erzeugt, indem diejenigen Zellen des mindestens einen freien Bereichs, welche in Längsrichtung an genau eine freie Zelle angrenzen, wobei die besagte freie Zelle Teil einer linienförmigen Aneinanderreihung einer Mindestanzahl von freien Zellen in Längsrichtung ist, und in Querrichtung an genau eine freie Zelle angrenzen, wobei die besagte freie Zelle Teil einer linienförmigen Aneinanderreihung einer Mindestanzahl von freien Zellen in Querrichtung ist, als Kurvenpunkte gekennzeichnet werden. Ferner werden für jeden der Kurvenpunkte Verbindungen zu anderen Knotenpunkten erfasst. Dabei umfasst eine derartige Verbindung eine Aneinanderreihung einzelner freier Zellen zwischen zwei Knotenpunkten. Zu jeder erfassten Verbindung werden jeweils eine Verbindungsrichtung und eine Verbindungslänge ermittelt.

Ein Wert für die besagte Mindestanzahl ist annähernd frei wählbar. Vorteilhaft wird die Mindestanzahl an freien Zellen zwischen drei und sieben gewählt. Vorzugsweise wird die Mindestanzahl an freien Zellen zwischen vier und sechs gewählt. Besonders vorzugsweise wird die Mindestanzahl an freien Zellen gleich fünf gewählt.

Gemäß einer bevorzugten Weiterbildung der Erfindung weist eine Verbindung auch eine Verbindungsbreite auf. Der Graph der Korrekturkarte und/oder der Grundkarte wird dabei erzeugt, indem zusätzlich zu jeder erfassten Verbindung jeweils eine Verbindungsbreite ermittelt wird, indem von jeder freien Zelle der Verbindung beidseitig jeweils ein Verbindungsabstand in einer Richtung rechtwinklig zu der Verbindungsrichtung zu dem jeweils nächstgelegenen gesperrten Bereich ermittelt wird. Der besagten freien Zelle wird dann eine Wegbreite zugeordnet, welche als Summe der beiden ermittelten Verbindungsabstände berechnet wird. Die Verbindungsbreite der Verbindung wird dabei als die kleinste Wegbreite aller freien Zellen der besagten Verbindung ermittelt.

Durch Berücksichtigung der Verbindungsbreite einer Verbindung ist ermittelbar, ob die Verbindung von dem mobilen System nutzbar ist. Sofern mehrere mobile Systeme in der technischen Anlage vorhanden sind, so ist es denkbar, dass diese mobilen Systeme verschiedene Fahrzeugbreiten aufweisen. Auch ist es denkbar, dass die mobilen Systeme Gegenstände mit verschiedenen Breiten transportieren. Die Verbindung ist dann in Abhängigkeit von der ermittelten Verbindungsbreite nur von ausgewählten mobilen Systemen nutzbar.

Vorteilhaft wird zu jeder erfassten Verbindung jeweils die Verbindungsrichtung ermittelt, indem der Verbindungsrichtung diejenige Hauptrichtung zugeordnet wird, welche der exakten Verbindungsrichtung am nächsten kommt. Hauptrichtungen sind dabei eine positive Längsrichtung, eine negative Längsrichtung, eine positive Querrichtung sowie eine negative Querrichtung.

Gemäß einer vorteilhaften Weiterbildung der Erfindung umfasst das mindestens eine mobile System einen Übertragerkopf zur berührungslosen Aufnahme von Energie, und die technische Anlage weist mindestens einen Ladepunkt zur induktiven Übertragung von Energie auf. Dabei ist der Übertragerkopf mit dem Ladepunkt induktiv koppelbar. Der mindestens eine Ladepunkt ist dabei in einem Knotenpunkt angeordnet. Der Ladepunkt umfasst dazu beispielsweise eine Primärspule, mittels welcher Energie induktiv und berührungslos zu dem Übertragerkopf des mobile Systems übertragbar ist. Somit ist ein Energiespeicher des mobilen Systems aufladbar, während sich das mobile System auf dem Knotenpunkt befindet.

Gemäß einer weiteren vorteilhaften Weiterbildung der Erfindung umfasst das mindestens eine mobile System einen Übertragerkopf zur berührungslosen Aufnahme von Energie, und die technische Anlage weist mindestens eine Leiterschleife zur induktiven Übertragung von Energie auf. Dabei ist der Übertragerkopf mit der Leiterschleife induktiv koppelbar. Die mindestens eine Leiterschleife ist dabei entlang einer Verbindung zwischen zwei Knotenpunkten angeordnet. Die Leiterschleife umfasst dazu beispielsweise einen langgestreckten Primärleiter, mittels welchem Energie induktiv und berührungslos zu dem Übertragerkopf des mobile Systems übertragbar ist. Somit ist ein Energiespeicher des mobilen Systems aufladbar, während sich das mobile System auf der Verbindung zwischen den Knotenpunkten bewegt.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem' Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:

Figur 1: eine Korrekturkarte von einer technischen Anlage in Form einer ursprünglichen Rasterzellenkarte,

Figur 2: die Korrekturkarte aus Figur 1 in Form einer reduzierten Rasterzellenkarte,

Figur 3: die Korrekturkarte aus Figur 2 mit einem Skelett,

Figur 4: einen Ausschnitt eines Skeletts vor einer Glättung,

Figur 5: den Ausschnitt des Skeletts aus Figur 4 nach der Glättung,

Figur 6: einen in Ausschnitt eines Skeletts mit einem Kurvenpunkt,

Figur 7: eine Korrekturkarte von einer anderen technischen Anlage mit einem Skelett,

Figur 8: einen Teil eines Graphen der Korrekturkarte aus Figur 7 und

Figur 9: eine Darstellung zur Ermittlung von Verbindungsparametern.

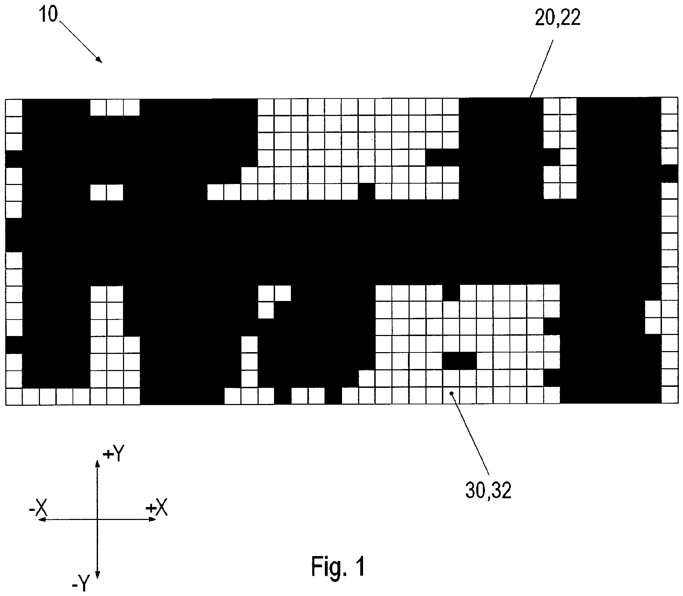

Figur 1 zeigt eine Korrekturkarte von einer technischen Anlage in Form einer ursprünglichen Rasterzellenkarte 10. Die ursprüngliche Rasterzellenkarte 10 ist zweidimensional ausgebildet und erstreckt sich in einer positiven Längsrichtung +X, in einer dazu antiparallelen negativen Längsrichtung -X, in einer dazu rechtwinkligen positiven Querrichtung +Y und in einer dazu antiparallelen negativen Querrichtung -Y. Die positive Längsrichtung +X und die negative Längsrichtung -X werden auch gemeinsam als Längsrichtung X bezeichnet. Die positive Querrichtung +Y und die negative Querrichtung -Y werden auch gemeinsam als Querrichtung Y bezeichnet. Die Längsrichtung X und die Querrichtung Y definieren somit ein zweidimensionales kartesisches Koordinatensystem.

Bei der technischen Anlage handelt es sich um eine industrielle Anwendung, beispielsweise ein Produktionswerk. Bei dem mobilen System der technischen Anlage handelt es sich um ein autonom fahrendes Fahrzeug. Das mobile System dient insbesondere zum Transport von Gegenständen innerhalb der technischen Anlage. Die technische Anlage weist von dem mobilen System befahrbare Bereiche 20 auf, beispielswiese leere Flächen und Wege. Die technische Anlage weist auch für das mobile System gesperrte Bereiche 30 auf, beispielsweise Montagestationen, Werkbänke oder ähnliche Objekte.

Die ursprüngliche Rasterzellenkarte 10 weist eine Vielzahl von einzelnen Zellen auf, welche in Längsrichtung X sowie in Querrichtung Y nebeneinander angeordnet sind. Zellen, welche einen von dem mobilen System befahrbaren Bereich 20 beschreiben, werden als frei gekennzeichnet. Zellen, welche einen für das mobile System gesperrten Bereich 30 beschreiben, werden als belegt gekennzeichnet. Die freien Zellen bilden dabei einen freien Bereich 22, und die belegten Zellen bilden einen belegten Bereich 32.

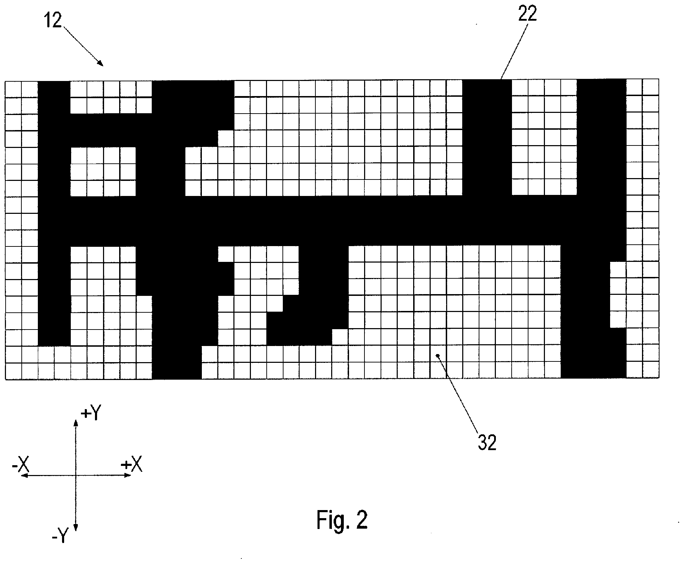

Figur 2 zeigt die Korrekturkarte aus Figur 1 in Form einer reduzierten Rasterzellenkarte 12. Die reduzierte Rasterzellenkarte 12 entsteht aus der ursprünglichen Rasterzellenkarte 10, indem bestimmte freie Zellen als belegt gekennzeichnet werden. Insbesondere werden diejenigen Zellen des freien Bereichs 22, deren Abstand in Längsrichtung X und/oder in Querrichtung Y zu mindestens einer Zelle eines belegten Bereichs 32 geringer als ein Sicherheitsabstand ist, als belegt gekennzeichnet. Alternativ werden diejenigen Zellen des freien Bereichs 22 als belegt gekennzeichnet, wenn deren Abstand in Form einer Luftlinie zu dem belegten Bereich geringer als ein Sicherheitsabstand ist. Der Sicherheitsabstand ist dabei frei wählbar. Bei der Wahl des Sicherheitsabstandes soll eine erforderliche Entfernung des mobilen Systems zu Objekten der gesperrte Bereiche 30 sowie eine Breite des mobilen Systems berücksichtigt werden.

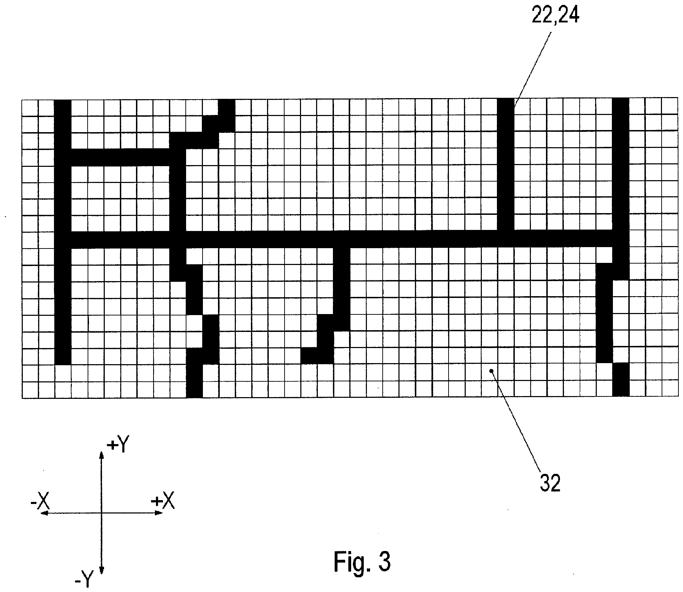

Figur 3 zeigt die Korrekturkarte aus Figur 2 mit einem Skelett 24 des freien Bereichs 22. Das Skelett 24 des freien Bereichs 22 entsteht, indem ausgehend von der reduzierten Rasterzellenkarte 12 eine Verdünnung des freien Bereichs 22 durchgeführt wird. Dabei werden Zellen des freien Bereichs 22, welche in Längsrichtung X und/oder in Querrichtung Y an einen belegten Bereich 32 angrenzen, als belegt gekennzeichnet. Dieser Vorgang wird solange fortgesetzt, bis der freie Bereich 22 in Form eines Skeletts 24 vorliegt. Das Skelett 24 umfasst dabei nur noch eine dünne, insbesondere linienförmige Aneinanderreihung einzelner freier Zellen.

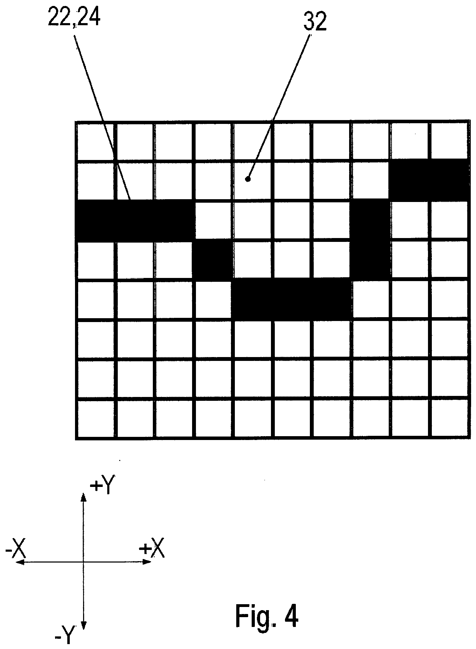

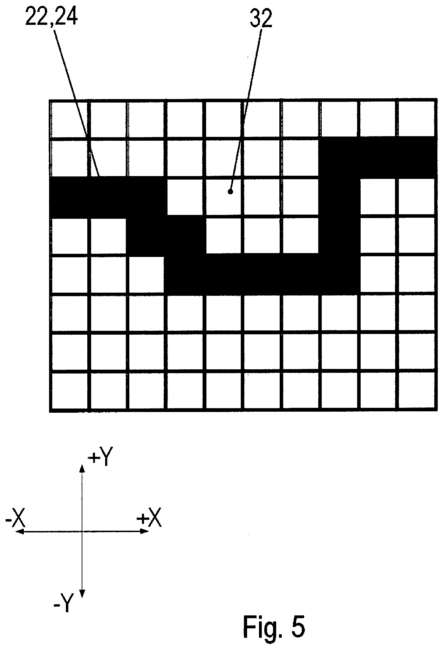

Figur 4 zeigt einen Ausschnitt eines Skeletts 24 des freien Bereichs 22 vor einer Glättung. Das Skelett 24 weist freie Zellen auf, welche an andere freie Zellen ausschließlich in Diagonalrichtung angrenzen, jedoch nicht in Längsrichtung X und nicht in Querrichtung Y. Es wird daher eine Glättung des Skeletts 24 durchgeführt, indem belegte Zellen des belegten Bereichs 32, welche in Längsrichtung X und in Querrichtung Y an den freien Bereich 22 angrenzen, als frei gekennzeichnet werden, bis jede freie Zelle des freien Bereichs 22 welche in Diagonalrichtung an eine andere freie Zelle angrenzt, zusätzlich in Längsrichtung X oder in Querrichtung Y an eine weitere freie Zelle angrenzt, welche in Längsrichtung X oder in Querrichtung Y an die besagte andere freie Zelle angrenzt. Figur 5 zeigt den Ausschnitt des Skeletts aus Figur 4 nach der Glättung.

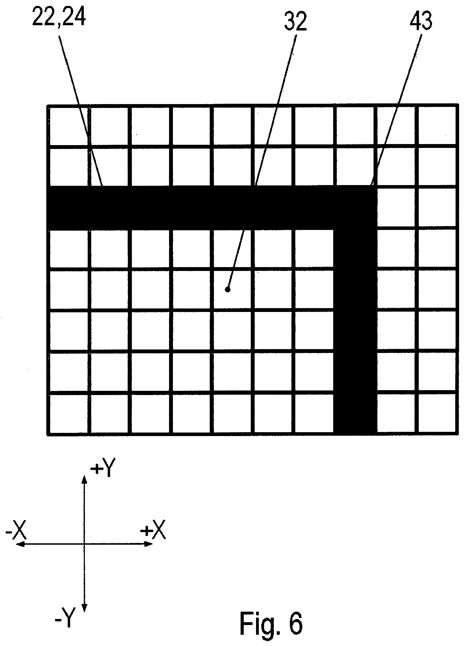

Figur 6 zeigt einen Ausschnitt eines Skeletts 24 eines freien Bereichs 22 mit einem Kurvenpunkt 43. Der Kurvenpunkt 43 grenzt in negative Längsrichtung -X an eine freie Zelle des freien Bereichs 22 und in positive Längsrichtung +X an eine belegte Zelle des belegten Bereichs 32 an. Der Kurvenpunkt 43 grenzt also in Längsrichtung X an genau eine freie Zelle an, wobei die besagte freie Zelle Teil einer linienförmigen Aneinanderreihung einer Mindestanzahl von freien Zellen in Längsrichtung X ist. Der Kurvenpunkt 43 grenzt auch in negative Querrichtung -Y an eine freie Zelle des freien Bereichs 22 und in positive Querrichtung +Y an eine belegte Zelle des belegten Bereichs 32 an. Der Kurvenpunkt 43 grenzt also in Querrichtung Y an genau eine freie Zelle an, wobei die besagte freie Zelle Teil einer linienförmigen Aneinanderreihung einer Mindestanzahl an freien Zellen in Querrichtung Y ist. Als Wert für die Mindestanzahl an freien Zellen in Längsrichtung X ebenso wie in Querrichtung Y wurde vorliegend eine Anzahl von fünf Zellen gewählt.

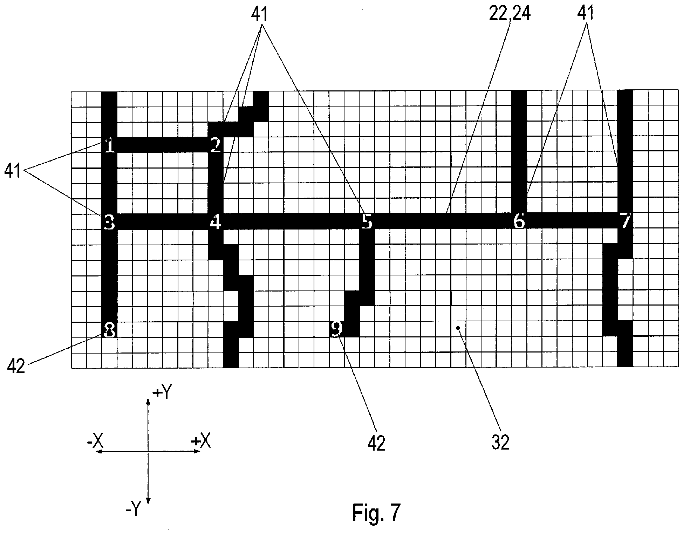

Figur 7 zeigt die Korrekturkarte aus Figur 3 mit dem Skelett 24 des freien Bereichs 22. Das Skelett 24 weist dabei mehrere Kreuzungspunkte 41 und mehrere Endpunkte 42 auf. Das Skelett 24 weist jedoch keinen Kurvenpunkt 43 auf. Kreuzungspunkte 41 sind diejenigen Zellen des freien Bereichs 22, welche in Längsrichtung X sowie in Querrichtung Y an drei oder vier andere freie Zellen des freien Bereichs 22 angrenzen. Endpunkte 42 sind diejenigen Zellen des freien Bereichs 22, welche in Längsrichtung X sowie in Querrichtung Y an genau eine freie Zelle des freien Bereichs 22 angrenzen.

Alle Kreuzungspunkte 41, alle Endpunkte 42 und sofern vorhanden alle Kurvenpunkte 43 stellen Knotenpunkte eines zu erzeugenden Graphen der Korrekturkarte dar. Das hier gezeigte Skelett 24 umfasst einen ersten Knotenpunkt 1, einen zweiten Knotenpunkt 2, einen dritten Knotenpunkt 3, einen vierten Knotenpunkt 4, einen fünften Knotenpunkt 5, einen sechsten Knotenpunkt 6, einen siebten Knotenpunkt 7, einen achten Knotenpunkt 8 und einen neunten Knotenpunkt 9. Der achte Knotenpunkt 8 und der neunte Knotenpunkt 9 sind dabei Endpunkte 42, die übrigen Knotenpunkte 1, 2, 3, 4, 5, 6, 7 sind Kreuzungspunkte 41.

Für jeden Knotenpunkt 1, 2, 3, 4, 5, 6, 7, 8, 9, also für jeden Kreuzungspunkt 41, für jeden Endpunkt 42 und sofern vorhanden für jeden Kurvenpunkt 43, werden nun Verbindungen V zu anderen Knotenpunkten 1, 2, 3, 4, 5, 6, 7, 8, 9 erfasst. Eine solche Verbindung V umfasst dabei eine Aneinanderreihung einzelner freier Zellen zwischen je zwei Knotenpunkten 1, 2, 3, 4, 5, 6, 7, 8, 9. Eine Verbindung V weist eine Verbindungsrichtung R, eine Verbindungslänge L und eine Verbindungsbreite B auf.

Dabei werden alle an den jeweiligen Knotenpunkt 1, 2, 3, 4, 5, 6, 7, 8, 9 angrenzenden Aneinanderreihungen einzelner freier Zellen abgelaufen, bis ein Endpunkt 42 erreicht ist, bis ein Kurvenpunkt 43 erreicht ist, oder bis ein Rand der Korrekturkarte erreicht ist. An einem Kurvenpunkt 43 findet dabei ein signifikanter Richtungswechsel statt. Ein Richtungswechsel wird als signifikant angesehen, wenn danach eine linienförmige Aneinanderreihung der Mindestanzahl von freien Zellen in der gleichen Richtung folgt. Bei Erreichen eines nicht signifikanten Richtungswechsels wird die Aneinanderreihungen einzelner freier Zellen weiter abgelaufen.

Wenn beim Ablaufen einer Aneinanderreihung einzelner freier Zellen ein Kreuzungspunkt 41 erreicht wird, so wird zunächst die Verbindung V zu diesem Kreuzungspunkt 41 erfasst. Anschließend erfolgt, sofern möglich, ein weiteres Ablaufen einer Aneinanderreihung einzelner freier Zellen ab dem besagten Kreuzungspunkt 41 in die gleiche Richtung, bis der nächste Knotenpunkt 1, 2, 3, 4, 5, 6, 7, 8, 9 erreicht ist, und die Verbindung V zu diesem Kreuzungspunkt 41 wird erfasst. Alle Knotenpunkte 1, 2, 3, 4, 5, 6, 7, 8, 9, welche ohne signifikanten Richtungswechsel von einem Knotenpunkt 1, 2, 3, 4, 5, 6, 7, 8, 9 erreichbar sind, also auch durch andere Kreuzungspunkt 41 hindurch, weisen somit eine Verbindung V zu dem besagten Knotenpunkt 1, 2, 3, 4, 5, 6, 7, 8, 9 auf.

Zu jeder erfassten Verbindung V zwischen jeweils zwei Knotenpunkten 1, 2, 3, 4, 5, 6, 7, 8, 9 wird jeweils eine Verbindungsrichtung R, eine Verbindungslänge L und eine Verbindungsbreite B ermittelt. Es wird also festgehalten, mit welchen Knotenpunkten 1, 2, 3, 4, 5, 6, 7, 8, 9 der aktuell untersuchte Knotenpunkt 1, 2, 3, 4, 5, 6, 7, 8, 9 eine Verbindung V aufweist, sowie welche jeweilige Verbindungsrichtung R, welche Verbindungslänge L und welche Verbindungsbreite B diese Verbindung V aufweist.

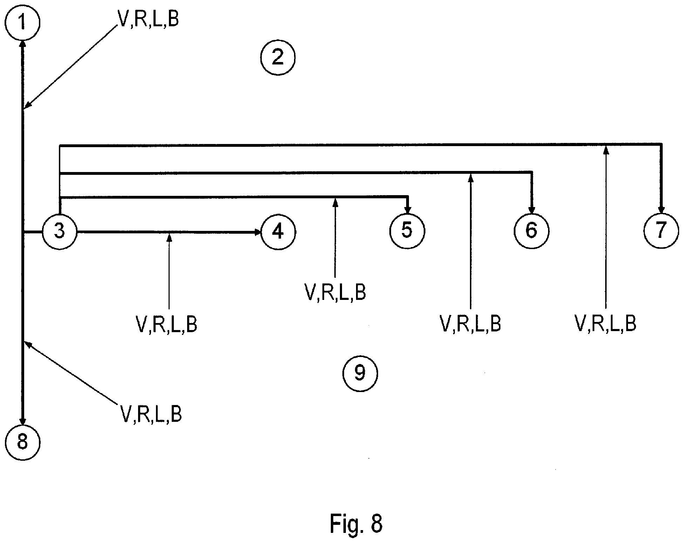

Aus den Knotenpunkten 1, 2, 3, 4, 5, 6, 7, 8, 9 und ermittelten Verbindungen V des Skeletts 24 des freien Bereichs 22 wird ein Graph der Korrekturkarte erstellt. Figur 8 zeigt einen Teil des erstellten Graphen der Korrekturkarte aus Figur 7. Zur Erhöhung der Übersichtlichkeit sind in dem hier dargestellten Graph nur die zu dem dritten Knotenpunkt 3 gehörigen Verbindungen V gezeigt.

Der dritte Knotenpunkt 3 weist vorliegend Verbindungen V zu dem ersten Knotenpunkt 1, dem vierten Knotenpunkt 4, dem fünften Knotenpunkt 5, dem sechsten Knotenpunkt 6, dem siebten Knotenpunkt 7 und dem achten Knotenpunkt 8 auf. Der dritte Knotenpunkt 3 weist vorliegend keine Verbindungen V zu dem zweiten Knotenpunkt 2 und dem neunten Knotenpunkt 9 auf.

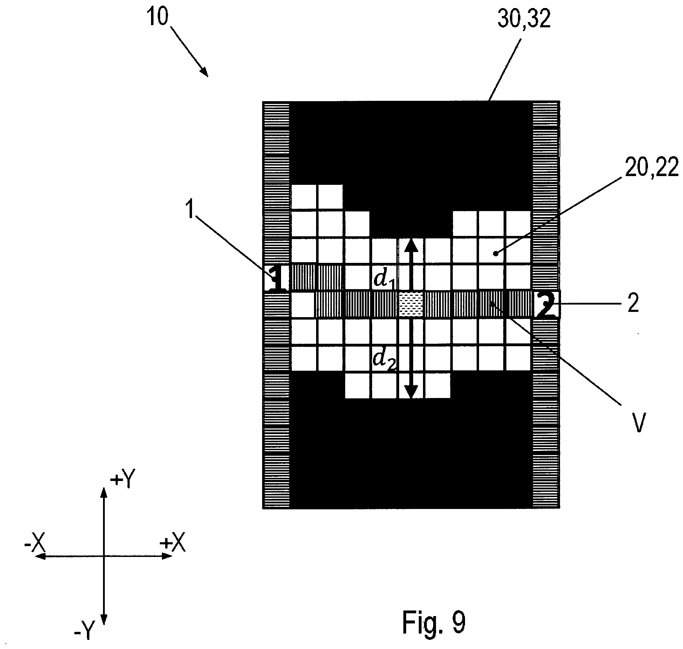

Figur 9 zeigt eine Darstellung zur Ermittlung von Verbindungsparametern, nämlich der Verbindungsrichtung R, der Verbindungslänge L und der Verbindungsbreite B einer Verbindung V zwischen einem ersten Knotenpunkt 1 und einem zweiten Knotenpunkt 2 mithilfe einer ursprünglichen Rasterzellenkarte 10. In der ursprünglichen Rasterzellenkarte 10 hat der erste Knotenpunkt 1 vorliegend die Koordinaten (X1/Y1), und der zweite Knotenpunkt 2 hat vorliegend die Koordinaten (X2/Y2).

Die Verbindungslänge L wird beispielsweise ermittelt, indem alle entlang der Verbindung V zwischen dem ersten Knotenpunkt 1 und dem zweiten Knotenpunkt 2 durchlaufenen freien Zellen gezählt werden.

Vorliegend ergibt sich dann:

$$L \quad = \quad 11$$

Alternativ wird die Verbindungslänge L in Form einer Luftlinie zwischen dem ersten Knotenpunkt 1 und dem zweiten Knotenpunkt 2 ermittelt. Die Verbindungslänge L wird dabei folgendermaßen berechnet:

$$L \quad = \quad \sqrt{(X2 - X1)^2 + (Y2 - Y1)^2}$$

Vorliegend ergibt sich dann:

$$L \quad = \quad 10{,}05$$

Wenn eine hohe Auflösung der Verbindungsrichtung R gewünscht ist, so wird die Verbindungsrichtung R beispielsweise als Winkel in Bezug auf die positive Längsrichtung +X ermittelt. Die Verbindungsrichtung R wird dabei folgendermaßen berechnet:

$$R \quad = \quad \mathrm{atan}\left(\frac{Y2 - Y1}{X2 - X1}\right)$$

Vorliegend ergibt sich dann:

$$R \quad = \quad -5{,}7°$$

Wenn eine geringe Auflösung der Verbindungsrichtung R gewünscht ist, so wird der Verbindungsrichtung R beispielsweise diejenige Hauptrichtung zugeordnet, welche der exakten Verbindungsrichtung R am nächsten kommt, also die positive Längsrichtung +X, die negative Längsrichtung -X, die positive Querrichtung +Y oder die negative Querrichtung -Y.

Vorliegend ergibt sich dann:

$$R \quad = \quad +X$$

Zur Ermittlung der Verbindungsbreite B wird beispielsweise von jeder freien Zelle der Verbindung V ein erster Verbindungsabstand d1 in einer Richtung rechtwinklig zu der Verbindungsrichtung R zu dem nächstgelegenen gesperrten Bereich 30 ermittelt, und ein zweiter Verbindungsabstand d2 in einer entgegengesetzten Richtung rechtwinklig zu der Verbindungsrichtung R zu dem nächstgelegenen gesperrten Bereich 30 wird ermittelt. Der besagten freien Zelle wird eine Wegbreite zugeordnet, welche als Summe der beiden ermittelten Verbindungsabstände d1, d2 berechnet wird. Die Verbindungsbreite B wird als die kleinste Wegbreite aller freien Zellen der Verbindung V ermittelt.

Vorliegend ergibt sich dann:

$$B \quad = \quad 5$$

**Bezugszeichenliste**

| 1 | erster Knotenpunkt |
|---|---|
| 2 | zweiter Knotenpunkt |
| 3 | dritter Knotenpunkt |
| 4 | vierter Knotenpunkt |
| 5 | fünfter Knotenpunkt |
| 6 | sechster Knotenpunkt |
| 7 | siebter Knotenpunkt |
| 8 | achter Knotenpunkt |
| 9 | neunter Knotenpunkt |
| 10 | ursprüngliche Rasterzellenkarte |
| 12 | reduzierte Rasterzellenkarte |
| 20 | befahrbarer Bereich |
| 22 | freier Bereich |
| 24 | Skelett |
| 30 | gesperrter Bereich |
| 32 | belegter Bereich |
| 41 | Kreuzungspunkt |
| 42 | Endpunkt |
| 43 | Kurvenpunkt |
| V | Verbindung |
| R | Verbindungsrichtung |
| L | Verbindungslänge |
| B | Verbindungsbreite |
| d1 | erster Verbindungsabstand |
| d2 | zweiter Verbindungsabstand |
| X | Längsrichtung |
| +X | positive Längsrichtung |
| -X | negative Längsrichtung |
| Y | Querrichtung |
| +Y | positive Querrichtung |
| -Y | negative Querrichtung |

**Patentansprüche**

1. Verfahren zum Betreiben einer technischen Anlage,

   welche mindestens ein mobiles System aufweist, wobei
   eine Grundkarte der technischen Anlage erzeugt wird, welche Informationen über mindestens einen befahrbaren Bereich (20) und mindestens einen gesperrten Bereich (30) aufweist; und eine Korrekturkarte der technischen Anlage erzeugt wird, welche Informationen über mindestens einen befahrbaren (20) Bereich und mindestens einen gesperrten Bereich (30) aufweist; und
   die Grundkarte mit der Korrekturkarte überlagert wird; und
   mindestens ein metrisches Merkmal der Grundkarte durch ein metrisches Merkmal der Korrekturkarte ersetzt wird, wenn eine Abweichung zwischen einem metrischen Merkmal der Grundkarte und einem metrischen Merkmal der Korrekturkarte erkannt wird,
   **dadurch gekennzeichnet, dass**
   die Grundkarte und die Korrekturkarte jeweils in Form eines Graphen erzeugt werden, welcher den mindestens einen befahrbaren Bereich (20) beschreibt, wobei
   der Graph mindestens einen ersten Knotenpunkt (1, 2, 3, 4, 5, 6, 7, 8, 9), einen zweiten Knotenpunkt (1, 2, 3, 4, 5, 6, 7, 8, 9) und mindestens eine Verbindung (V) zwischen dem ersten Knotenpunkt (1, 2, 3, 4, 5, 6, 7, 8, 9) und dem zweiten Knotenpunkt (1, 2, 3, 4, 5, 6, 7, 8, 9) als topologische Merkmale umfasst, wobei
   eine Verbindung (V) eine Verbindungsrichtung (R) und eine Verbindungslänge (L) aufweist; und der Graph der Grundkarte mit dem Graphen der Korrekturkarte überlagert wird.

2. Verfahren nach Anspruch 1, wobei

   die Grundkarte der technischen Anlage Informationen über mindestens einen geplanten Fahrweg für das mindestens eine mobile System aufweist; und

die Korrekturkarte der technischen Anlage Informationen über mindestens einen geplanten Fahrweg für das mindestens eine mobile System aufweist; und

wenn die Grundkarte mit der Korrekturkarte überlagert wird

mindestens ein Parameter des mindestens einen geplanten Fahrwegs der Grundkarte auf den entsprechenden geplanten Fahrweg der Korrekturkarte übertragen wird.

3. Verfahren nach einem der vorangegangenen Ansprüche, wobei

bei der Überlagerung des Graphen der Grundkarte mit dem Graphen der Korrekturkarte die Verbindungslänge (L) und die Differenz der Verbindungsrichtungen (R) zwischen den entsprechenden Knotenpunkten (1, 2, 3, 4, 5, 6, 7, 8, 9) verwendet werden.

4. Verfahren nach einem der vorangegangenen Ansprüche, umfassend folgende Schritte:

- die Korrekturkarte und/oder die Grundkarte werden zunächst in Form einer ursprünglichen Rasterzellenkarte (10) aufgenommen, welche sich in einer Längsrichtung (X) und in einer dazu rechtwinkligen Querrichtung (Y) erstreckt, und welche eine Vielzahl von einzelnen Zellen aufweist, wobei

diejenigen Zellen, welche den mindestens einen befahrbaren Bereich (20) beschreiben, als frei gekennzeichnet werden, und diejenigen Zellen, welche den mindestens einen gesperrten Bereich (30) beschreiben, als belegt gekennzeichnet werden, so dass

die freien Zellen mindestens einen freien Bereich bilden (22), und

die belegten Zellen mindestens einen belegten Bereich (32) bilden;

- aus der ursprünglichen Rasterzellenkarte (10) wird eine reduzierte Rasterzellenkarte (12) erzeugt, indem diejenigen Zellen des mindestens einen freien Bereichs (22) der ursprünglichen Rasterzellenkarte (10), deren Abstand in Längsrichtung (X) und/oder in Querrichtung (Y) und/oder in Luftlinie zu mindestens einer Zelle des mindestens einen belegten Bereichs (32) geringer als ein Sicherheitsabstand ist, als belegt gekennzeichnet werden;

- es wird eine Verdünnung des mindestens einen freien Bereichs (22) der reduzierten Rasterzellenkarte (12) durchgeführt, indem

Zellen des mindestens einen freien Bereichs (22), welche in Längsrichtung (X) und/oder in Querrichtung (Y) an mindestens einen belegten Bereich (32) angrenzen, als belegt gekennzeichnet werden, bis

der mindestens eine freie Bereich (22) in Form eines Skeletts (24) vorliegt, welches mindestens eine linienförmige Aneinanderreihung einzelner freier Zellen umfasst; und

- aus dem Skelett (24) des mindestens einen freien Bereichs (22) werden der Graph der Korrekturkarte und/oder der Grundkarte erzeugt.

5. Verfahren nach Anspruch 4, wobei

vor dem Erzeugen des Graphen der Korrekturkarte und/oder der Grundkarte eine Glättung des Skeletts (24) des mindestens einen freien Bereichs (22) durchgeführt wird, indem

Zellen des mindestens einen belegten Bereichs (32), welche in Längsrichtung (X) und in Querrichtung (Y) an mindestens einen freien Bereich (22) angrenzen, als frei gekennzeichnet werden, bis

jede Zelle des freien Bereichs (22), welche in Diagonalrichtung an eine andere freie Zelle angrenzt, zusätzlich in Längsrichtung (X) oder in Querrichtung (Y) an eine weitere freie Zelle angrenzt, welche in Längsrichtung (X) oder in Querrichtung (Y) an die besagte andere freie Zelle angrenzt.

6. Verfahren nach einem der Ansprüche 4 bis 5, wobei

in der reduzierten Rasterzellenkarte (12) mindestens ein Ladepunkt zum Laden des mindestens einen mobilen Systems vorgesehen ist, und

die Verdünnung des mindestens einen freien Bereichs (22) der reduzierten Rasterzellenkarte (12) derart durchgeführt wird, dass

der mindestens eine Ladepunkt Teil des Skeletts (24) ist.

7.  Verfahren nach Anspruch 6, wobei

    der Graph mindestens einen Ladepunkt als Knotenpunkt (1, 2, 3, 4, 5, 6, 7, 8, 9) umfasst, und wobei der Graph erzeugt wird, indem
    für jeden der Ladepunkte Verbindungen (V) zu anderen Knotenpunkten (1, 2, 3, 4, 5, 6, 7, 8, 9) erfasst werden, wobei eine Verbindung (V) eine Aneinanderreihung einzelner freier Zellen zwischen zwei Knotenpunkten (1, 2, 3, 4, 5, 6, 7, 8, 9) umfasst; und
    zu jeder erfassten Verbindung (V) jeweils eine Verbindungsrichtung (R) und eine Verbindungslänge (L) ermittelt werden.

8.  Verfahren nach einem der vorangegangenen Ansprüche, wobei

    der Graph mindestens einen Kreuzungspunkt (41) als Knotenpunkt (1, 2, 3, 4, 5, 6, 7, 8, 9) umfasst, und wobei der Graph erzeugt wird, indem
    diejenigen Zellen des mindestens einen freien Bereichs (22), welche in Längsrichtung (X) sowie in Querrichtung (Y) an mindestens drei andere freie Zellen angrenzen, als Kreuzungspunkte (41) gekennzeichnet werden; und
    für jeden der Kreuzungspunkte (41) Verbindungen (V) zu anderen Knotenpunkten (1, 2, 3, 4, 5, 6, 7, 8, 9) erfasst werden, wobei eine Verbindung (V) eine Aneinanderreihung einzelner freier Zellen zwischen zwei Knotenpunkten (1, 2, 3, 4, 5, 6, 7, 8, 9) umfasst; und
    zu jeder erfassten Verbindung (V) jeweils eine Verbindungsrichtung (R) und eine Verbindungslänge (L) ermittelt werden.

9.  Verfahren nach einem der vorangegangenen Ansprüche, wobei

    der Graph mindestens einen Endpunkt (42) als Knotenpunkt (1, 2, 3, 4, 5, 6, 7, 8, 9) umfasst, und wobei der Graph erzeugt wird, indem
    diejenigen Zellen des mindestens einen freien Bereichs (22), welche in Längsrichtung (X) sowie in Querrichtung (Y) an genau eine freie Zelle angrenzen, als Endpunkte (42) gekennzeichnet werden; und
    für jeden der Endpunkte (42) Verbindungen (V) zu anderen Knotenpunkten (1, 2, 3, 4, 5, 6, 7, 8, 9) erfasst werden, wobei eine Verbindung (V) eine Aneinanderreihung einzelner freier Zellen zwischen zwei Knotenpunkten (1, 2, 3, 4, 5, 6, 7, 8, 9) umfasst; und
    zu jeder erfassten Verbindung (V) jeweils eine Verbindungsrichtung (R) und eine Verbindungslänge (L) ermittelt werden.

10. Verfahren nach einem der vorangegangenen Ansprüche, wobei

    der Graph mindestens einen Kurvenpunkt (43) als Knotenpunkt (1, 2, 3, 4, 5, 6, 7, 8, 9) umfasst, und wobei der Graph erzeugt wird, indem
    diejenigen Zellen des mindestens einen freien Bereichs (22), welche
    in Längsrichtung (X) an genau eine freie Zelle angrenzen, wobei die besagte freie Zelle Teil einer linienförmigen Aneinanderreihung einer Mindestanzahl von freien Zellen in Längsrichtung (X) ist, und
    in Querrichtung (Y) an genau eine freie Zelle angrenzen, wobei die besagte freie Zelle Teil einer linienförmigen Aneinanderreihung einer Mindestanzahl von freien Zellen in Querrichtung (Y) ist, als Kurvenpunkte (43) gekennzeichnet werden; und
    für jeden der Kurvenpunkte (43) Verbindungen zu anderen Knotenpunkten (1, 2, 3, 4, 5, 6, 7, 8, 9) erfasst werden, wobei
    eine Verbindung (V) eine Aneinanderreihung einzelner freier Zellen zwischen zwei Knotenpunkten (1, 2, 3, 4, 5, 6, 7, 8, 9) umfasst; und
    zu jeder erfassten Verbindung (V) jeweils eine Verbindungsrichtung (R) und eine Verbindungslänge (L) ermittelt werden.

11. Verfahren nach einem der vorangegangenen Ansprüche, wobei

    eine Verbindung (V) eine Verbindungsbreite (B) aufweist, und wobei
    der Graph der Korrekturkarte und/oder der Grundkarte erzeugt wird, indem zusätzlich zu jeder erfassten Verbindung (V) jeweils eine Verbindungsbreite (B) ermittelt wird, indem von jeder freien Zelle der Verbindung (V) beidseitig jeweils ein Verbindungsabstand (d1, d2) in einer Richtung rechtwinklig zu der Verbindungsrichtung (R) zu dem jeweils nächstgelegenen gesperrten Bereich (30) ermittelt wird; und

der besagten freien Zelle eine Wegbreite zugeordnet wird, welche als Summe der beiden ermittelten Verbindungsabstände (d1, d2) berechnet wird; und
die Verbindungsbreite (B) als die kleinste Wegbreite aller freien Zellen der Verbindung (V) ermittelt wird.

12. Verfahren nach einem der vorangegangenen Ansprüche, wobei
zu jeder erfassten Verbindung (V) jeweils die Verbindungsrichtung (R) ermittelt wird, indem der Verbindungsrichtung (R) diejenige Hauptrichtung (+X, -X, +Y, -Y) zugeordnet wird, welche der exakten Verbindungsrichtung (R) am nächsten kommt.

13. Verfahren nach einem der vorangegangenen Ansprüche, wobei

das mindestens eine mobile System einen Übertragerkopf zur berührungslosen Aufnahme von Energie umfasst, und
die technische Anlage mindestens einen Ladepunkt zur induktiven Übertragung von Energie aufweist, wobei der Übertragerkopf mit dem Ladepunkt induktiv koppelbar ist, und wobei der mindestens eine Ladepunkt in einem Knotenpunkt (1, 2, 3, 4, 5, 6, 7, 8, 9) angeordnet ist.

14. Verfahren nach einem der vorangegangenen Ansprüche, wobei

das mindestens eine mobile System einen Übertragerkopf zur berührungslosen Aufnahme von Energie umfasst, und
die technische Anlage mindestens eine Leiterschleife zur induktiven Übertragung von Energie aufweist, wobei der Übertragerkopf mit der Leiterschleife induktiv koppelbar ist, und wobei die mindestens eine Leiterschleife entlang einer Verbindung (V) zwischen zwei Knotenpunkten (1, 2, 3, 4, 5, 6, 7, 8, 9) angeordnet ist.

**Claims**

1. Method for operating a technical facility

that has at least one mobile system, wherein
a base map of the technical facility is generated, said base map comprising information on at least one accessible region (20) and at least one blocked region (30); and
a correction map of the technical facility is generated, said correction map comprising information on at least one accessible region (20) and at least one blocked region (30); and the base map is overlaid with the correction map; and
at least one metric feature of the base map is replaced with a metric feature of the correction map if a discrepancy is identified between a metric feature of the base map and a metric feature of the correction map,
**characterised in that**
the base map and the correction map are each generated in the form of a graph that describes the at least one accessible region (20), wherein
the graph comprises at least a first node point (1, 2, 3, 4, 5, 6, 7, 8, 9), a second node point (1, 2, 3, 4, 5, 6, 7, 8, 9) and at least one link (V) between the first node point (1, 2, 3, 4, 5, 6, 7, 8, 9) and the second node point (1, 2, 3, 4, 5, 6, 7, 8, 9) as topological features, wherein
a link (V) has a link direction (R) and a link length (L); and
the graph of the base map is overlaid with the graph of the correction map.

2. Method according to claim 1, wherein

the base map of the technical facility comprises information on at least one planned route for the at least one mobile system; and
the correction map of the technical facility comprises information on at least one planned route for the at least one mobile system; and
when the base map is overlaid with the correction map,
at least one parameter of the at least one planned route of the base map is transferred to the corresponding planned route of the correction map.

3. Method according to any of the preceding claims, wherein

the link length (L) and the difference in the link directions (R) between the corresponding node points (1, 2, 3, 4, 5, 6, 7, 8, 9) are used when overlaying the graph of the base map with the graph of the correction map.

4.  Method according to any of the preceding claims, comprising the following steps:

    - first, recording the correction map and/or the base map in the form of an original grid cell map (10) that extends in a longitudinal direction (X) and in a transverse direction (Y) at right angles thereto and has a multiplicity of individual cells, wherein

        the cells that describe the at least one accessible region (20) are designated as unobstructed, and the cells that describe the at least one blocked region (30) are designated as occupied, such that
        the unobstructed cells form at least one unobstructed region (22), and
        the occupied cells form at least one occupied region (32);

    - generating a reduced grid cell map (12) from the original grid cell map (10) by designating as occupied those cells of the at least one unobstructed region (22) of the original grid cell map (10) whose distance from at least one cell of the at least one occupied region (32) in the longitudinal direction (X) and/or in the transverse direction (Y) and/or as a bee line is less than a safety distance;
    - thinning the at least one unobstructed region (22) of the reduced grid cell map (12) by

        designating cells of the at least one unobstructed region (22) that adjoin at least one occupied region (32) in the longitudinal direction (X) and/or in the transverse direction (Y) as occupied until
        the at least one unobstructed region (22) is present in the form of a skeleton (24) that comprises at least one linear apposition of individual unobstructed cells; and

    - generating the graph of the correction map and/or of the base map from the skeleton (24) of the at least one unobstructed region (22).

5.  Method according to claim 4, wherein

    before the graph of the correction map and/or of the base map is generated,
    the skeleton (24) of the at least one unobstructed region (22) is smoothed by designating cells of the at least one occupied region (32) that adjoin at least one unobstructed region (22) in the longitudinal direction (X) and in the transverse direction (Y) as unobstructed until
    each cell of the unobstructed region (22) that adjoins another unobstructed cell in the diagonal direction additionally adjoins, in the longitudinal direction (X) or in the transverse direction (Y), a further unobstructed cell that adjoins said other unobstructed cell in the longitudinal direction (X) or in the transverse direction (Y).

6.  Method according to any of claims 4 to 5, wherein

    at least one charging point for charging the at least one mobile system is provided in the reduced grid cell map (12), and
    the at least one unobstructed region (22) of the reduced grid cell map (12) is thinned in such a way that
    the at least one charging point is part of the skeleton (24).

7.  Method according to claim 6, wherein

    the graph comprises at least one charging point as a node point (1, 2, 3, 4, 5, 6, 7, 8, 9), and wherein the graph is generated by
    detecting, for each of the charging points, links (V) to other node points (1, 2, 3, 4, 5, 6, 7, 8, 9), wherein a link (V) comprises an apposition of individual unobstructed cells between two node points (1, 2, 3, 4, 5, 6, 7, 8, 9); and
    in each case a link direction (R) and a link length (L) are determined for each detected link (V).

8.  Method according to any of the preceding claims, wherein

    the graph comprises at least one intersection point (41) as a node point (1, 2, 3, 4, 5, 6, 7, 8, 9), and wherein the graph is generated by
    designating as intersection points (41) those cells of the at least one unobstructed region (22) that adjoin at least three other unobstructed cells in the longitudinal direction (X) and in the transverse direction (Y); and
by detecting, for each of the intersection points (41), links (V) to other node points (1, 2, 3, 4, 5, 6, 7, 8, 9), wherein a link (V) comprises an apposition of individual unobstructed cells between two node points (1, 2, 3, 4, 5, 6, 7, 8, 9); and
in each case a link direction (R) and a link length (L) are determined for each detected link (V).

9. Method according to any of the preceding claims, wherein

the graph comprises at least one end point (42) as a node point (1, 2, 3, 4, 5, 6, 7, 8, 9), and wherein the graph is generated by
designating as end points (42) those cells of the at least one unobstructed region (22) that adjoin precisely one unobstructed cell in the longitudinal direction (X) and in the transverse direction (Y); and
by detecting, for each of the end points (42), links (V) to other node points (1, 2, 3, 4, 5, 6, 7, 8, 9), wherein a link (V) comprises an apposition of individual unobstructed cells between two node points (1, 2, 3, 4, 5, 6, 7, 8, 9); and
in each case a link direction (R) and a link length (L) are determined for each detected link (V).

10. Method according to any of the preceding claims, wherein

the graph comprises at least one bend point (43) as a node point (1, 2, 3, 4, 5, 6, 7, 8, 9), and wherein the graph is generated by
designating as bend points (43) those cells of the at least one unobstructed region (22) that adjoin precisely one unobstructed cell in the longitudinal direction (X), said unobstructed cell being part of a linear apposition of a minimum number of unobstructed cells in the longitudinal direction (X), and
adjoin precisely one unobstructed cell in the transverse direction (Y), said unobstructed cell being part of a linear apposition of a minimum number of unobstructed cells in the transverse direction (Y); and
by detecting, for each of the bend points (43), links to other node points (1, 2, 3, 4, 5, 6, 7, 8, 9); wherein a link (V) comprises an apposition of individual unobstructed cells between two node points (1, 2, 3, 4, 5, 6, 7, 8, 9); and
in each case a link direction (R) and a link length (L) are determined for each detected link (V).

11. Method according to any of the preceding claims, wherein

a link (V) has a link width (B), and wherein
the graph of the correction map and/or of the base map is generated by additionally determining in each case a link width (B) for each detected link (V) by determining a link distance (d1, d2) from both sides of each unobstructed cell of the link (V) to the relevant closest blocked region (30) in a direction at right angles to the link direction (R); and
said unobstructed cell is allocated a path width, which is calculated as the sum of the two determined link distances (d1, d2); and
the link width (B) is determined as the smallest path width of all the unobstructed cells of the link (V).

12. Method according to any of the preceding claims, wherein
in each case, the link direction (R) is determined for each detected link (V) by the main direction (+X, -X, +Y, -Y) that is closest to the exact link direction (R) being allocated to the link direction (R).

13. Method according to any of the preceding claims, wherein

the at least one mobile system comprises a transmitter head for contactlessly receiving energy, and
the technical facility has at least one charging point for inductively transmitting energy, wherein
the transmitter head can be inductively coupled to the charging point, and wherein
the at least one charging point is arranged in a node point (1, 2, 3, 4, 5, 6, 7, 8, 9).

14. Method according to any of the preceding claims, wherein

the at least one mobile system comprises a transmitter head for contactlessly receiving energy, and
the technical facility has at least one conductor loop for inductively transmitting energy, wherein
the transmitter head can be inductively coupled to the conductor loop, and wherein

the at least one conductor loop is arranged along a link (V) between two node points (1, 2, 3, 4, 5, 6, 7, 8, 9).

**Revendications**

1. Procédé de fonctionnement d'une installation technique,

   présentant au moins un système mobile, où
   une carte de base de l'installation technique est générée, qui présente des informations concernant au moins une région praticable (20) et au moins une région bloquée (30) ; et
   une carte corrective de l'installation technique est générée, qui présente des informations sur au moins une région praticable (20) et au moins une région bloquée (30) ; et
   la carte de base est superposée à la carte corrective ; et
   au moins une caractéristique métrique de la carte de base est remplacée par une caractéristique métrique de la carte corrective lorsqu'un écart est détecté entre une caractéristique métrique de la carte de base et une caractéristique métrique de la carte corrective,
   **caractérisé en ce que**
   la carte de base et la carte corrective sont respectivement générées sous la forme d'un graphe qui décrit la au moins une région carrossable (20), où
   le graphe comprend, en tant que caractéristiques topologiques, au moins un premier point nodal (1, 2, 3, 4, 5, 6, 7, 8, 9), un second point nodal (1, 2, 3, 4, 5, 6, 7, 8, 9) et au moins une liaison (V) entre le premier point nodal (1, 2, 3, 4, 5, 6, 7, 8, 9) et le second point nodal (1, 2, 3, 4, 5, 6, 7, 8, 9), où
   une liaison (V) présente une direction de liaison (R) et une longueur de liaison (L) ; et le graphe de la carte de base est superposé au graphe de la carte corrective.

2. Procédé selon la revendication 1, où

   la carte de base de l'installation technique présente des informations concernant au moins un itinéraire prévu pour le au moins un système mobile ; et
   la carte corrective de l'installation technique présente des informations sur au moins un itinéraire prévu pour le au moins un système mobile ; et
   si la carte de base est superposée à la carte corrective, au moins un paramètre du au moins un itinéraire prévu de la carte de base est transféré sur l'itinéraire prévu correspondant de la carte corrective.

3. Procédure selon l'une quelconque des revendications précédentes, où lors de la superposition du graphe de la carte de base avec le graphe de la carte corrective, la longueur de liaison (L) et la différence des directions de liaison (R) entre les points nodaux (1, 2, 3, 4, 5, 6, 7, 8, 9) correspondants sont utilisées.

4. Procédé selon l'une quelconque des revendications précédentes, comprenant les étapes ci-dessous :

   - la carte corrective et/ou la carte de base sont d'abord réceptionnées sous la forme d'une carte tramée initiale (10) qui s'étend dans une direction longitudinale (X) et dans une direction transversale (Y) perpendiculaire à celle-ci et qui présente une pluralité de cellules individuelles, où

     les cellules qui décrivent la au moins une région carrossable (20) sont désignées comme libres, et les cellules qui décrivent la au moins une région bloquée (30) sont désignées comme occupées, de sorte que les cellules libres forment au moins une région libre (22), et
     les cellules occupées forment au moins une région occupée (32) ;

   - une carte tramée réduite (12) est générée à partir de la carte tramée initiale (10) en désignant comme occupées les cellules de la au moins une région libre (22) de la carte tramée initiale (10) dont la distance dans la direction longitudinale (X) et/ou dans la direction transversale (Y) et/ou à vol d'oiseau par rapport à au moins une cellule de la au moins une région occupée (32) est inférieure à une distance de sécurité ;
   - une dilution de la au moins une région libre (22) de la carte tramée réduite (12) est mise en oeuvre en désignant comme occupées les cellules de la au moins une région libre (22) qui sont adjacentes à au moins une région occupée (32) dans la direction longitudinale (X) et/ou dans la direction transversale (Y), jusqu'à ce que la au moins une région libre (22) se présente sous la forme d'un squelette (24) comprenant au moins une juxtaposition linéaire de cellules libres individuelles ; et

- le graphe de la carte corrective et/ou de la carte de base est généré à partir du squelette (24) de la au moins une région libre (22).

5. Procédé selon la revendication 4, où

avant de générer le graphe de la carte corrective et/ou de la carte de base, un lissage du squelette (24) de la au moins une région libre (22) est mis en oeuvre en désignant comme libres les cellules de la au moins une région occupée (32) qui sont adjacentes à au moins une région libre (22) dans la direction longitudinale (X) et dans la direction transversale (Y), jusqu'à ce que chaque cellule de la région libre (22) qui est adjacente dans la direction diagonale à une autre cellule libre est en outre adjacente dans la direction longitudinale (X) ou dans la direction transversale (Y) à une autre cellule libre qui est adjacente à ladite autre cellule libre dans la direction longitudinale (X) ou dans la direction transversale (Y).

6. Procédé selon l'une quelconque des revendications 4 à 5, où

au moins un point de charge permettant de charger le au moins un système mobile est prévu dans la carte tramée réduite (12), et
la dilution de la au moins une région libre (22) de la carte tramée réduite (12) est mise en oeuvre de telle manière que le au moins un point de charge fait partie du squelette (24).

7. Procédé selon la revendication 6, où

le graphe comprend au moins un point de charge sous forme de point nodal (1, 2, 3, 4, 5, 6, 7, 8, 9), et
où le graphe est généré en détectant, pour chacun des points de charge, des liaisons (V) vers d'autres points nodaux (1, 2, 3, 4, 5, 6, 7, 8, 9), une liaison (V) comprenant une juxtaposition de cellules libres individuelles entre deux points nodaux (1, 2, 3, 4, 5, 6, 7, 8, 9) ; et
une direction de liaison (R) et une longueur de liaison (L) sont respectivement déterminées pour chaque liaison (V) détectée.

8. Procédé selon l'une quelconque des revendications précédentes, où

le graphe comprend au moins un point d'intersection (41) sous forme de point nodal (1, 2, 3, 4, 5, 6, 7, 8, 9), et où le graphe est généré en désignant comme points d'intersection (41) les cellules de la au moins une région libre (22) qui sont adjacentes à au moins trois autres cellules libres dans la direction longitudinale (X) et dans la direction transversale (Y) ; et
pour chacun des points d'intersection (41), des liaisons (V) vers d'autres points nodaux (1, 2, 3, 4, 5, 6, 7, 8, 9) sont détectées, une liaison (V) comprenant une juxtaposition de cellules libres individuelles entre deux points nodaux (1, 2, 3, 4, 5, 6, 7, 8, 9) ; et
une direction de liaison (R) et une longueur de liaison (L) sont respectivement déterminées pour chaque liaison (V) détectée.

9. Procédé selon l'une quelconque des revendications précédentes, où

le graphe comprend au moins un point d'extrémité (42) sous forme de point nodal (1, 2, 3, 4, 5, 6, 7, 8, 9), et où le graphe est généré en désignant comme points d'extrémité (42) les cellules de la au moins une région libre (22) qui sont adjacentes à exactement une cellule libre dans la direction longitudinale (X) et dans la direction transversale (Y) ; et
pour chacun des points d'extrémité (42), des liaisons (V) vers d'autres points nodaux (1, 2, 3, 4, 5, 6, 7, 8, 9) sont détectées, une liaison (V) comprenant une juxtaposition de cellules libres individuelles entre deux points nodaux (1, 2, 3, 4, 5, 6, 7, 8, 9) ; et
une direction de liaison (R) et une longueur de liaison (L) sont respectivement déterminées pour chaque liaison (V) détectée.

10. Procédé selon l'une quelconque des revendications précédentes, où

le graphe comprend au moins un point de courbe (43) sous forme de point nodal (1, 2, 3, 4, 5, 6, 7, 8, 9), et où le graphe est généré en désignant comme points de courbe (43) les cellules de la au moins une région libre (22) qui sont adjacentes dans la direction longitudinale (X) à exactement une cellule libre, ladite cellule libre faisant partie d'une juxtaposition linéaire d'un nombre minimum de cellules libres dans la direction longitudinale (X), et qui

sont adjacentes dans la direction transversale (Y) à exactement une cellule libre, ladite cellule libre faisant partie d'une juxtaposition linéaire d'un nombre minimum de cellules libres dans la direction transversale (Y) ; et

pour chacun des points de courbe (43), des liaisons vers d'autres points nodaux (1, 2, 3, 4, 5, 6, 7, 8, 9) sont détectées, où

une liaison (V) comprend une juxtaposition de cellules libres individuelles entre deux points nodaux (1, 2, 3, 4, 5, 6, 7, 8, 9) ; et

une direction de liaison (R) et une longueur de liaison (L) sont respectivement déterminées pour chaque liaison (V) détectée.

11. Procédé selon l'une quelconque des revendications précédentes, où

une liaison (V) présente une largeur de liaison (B), et où

le graphe de la carte corrective et/ou de la carte de base est généré en déterminant de manière supplémentaire respectivement une largeur de liaison (B) pour chaque liaison détectée (V), en déterminant respectivement une distance de liaison (d1, d2) dans une direction perpendiculaire à la direction de liaison (R) vers la région bloquée (30) la plus proche, des deux côtés à partir de chaque cellule libre de la liaison (V) ; et

une largeur de voie, calculée comme la somme des deux distances de liaison (dl, d2) déterminées, est attribuée à ladite cellule libre ; et

la largeur de liaison (B) est déterminée comme étant la plus petite largeur de voie de toutes les cellules libres de la liaison (V).

12. Procédé selon l'une quelconque des revendications précédentes, où pour chaque liaison (V) détectée, la direction de liaison (R) est respectivement déterminée en associant à la direction de liaison (R) la direction principale (+X, -X, +Y, -Y) qui se rapproche le plus de la direction de liaison (R) exacte.

13. Procédé selon l'une quelconque des revendications précédentes, où

le au moins un système mobile comprend une tête de transmission permettant une absorption sans contact de l'énergie, et

l'installation technique présente au moins un point de charge permettant une transmission inductive d'énergie, où

la tête de transmission peut être couplée de manière inductive au point de charge, et où

le au moins un point de charge est agencé dans un point nodal (1, 2, 3, 4, 5, 6, 7, 8, 9).

14. Procédé selon l'une quelconque des revendications précédentes, où

le au moins un système mobile comprend une tête de transmission permettant une absorption sans contact d'énergie, et

l'installation technique présente au moins une boucle conductrice permettant une transmission inductive d'énergie, où

la tête de transmission peut être couplée de manière inductive à la boucle conductrice, et où

la au moins une boucle conductrice est agencée le long d'une liaison (V) entre deux points nodaux (1, 2, 3, 4, 5, 6, 7, 8, 9).

Fig. 1

Fig. 2

Fig. 3

22,24        32

+Y

-X        +X

-Y

Fig. 4

22,24    32

+Y

-X    +X

-Y

Fig. 5

Fig. 6

Fig. 7

① V,R,L,B

②

③ ④ ⑤ ⑥ ⑦

V,R,L,B

V,R,L,B

V,R,L,B V,R,L,B

⑨

V,R,L,B

⑧

Fig. 8

Fig. 9

**EP 4 100 810 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019001253 A1
- DE 102018002378 A1
- DE 102018009114 A1
- DE 102019000903 A1
- US 20100293517 A1
- US 20040122590 A1
- US 6453233 B1

**In der Beschreibung aufgeführte Nicht-Patentliteratur**

- Retrieving Topological Information for Mobile Robots Provided with Grid Maps. **PORTUGAL, DAVID RO-CHA, RUI P.** Agents and Artificial Intelligence. ICAART2012. Communications in Computer and Information Science. Springer, 2013, vol. 358
- **CORDELLA, LUIGI P.** A (sub)graph isomorphism algorithm for matching large graphs. *IEEE Transactions on Pattern Analysis and Machine Intelligence,* 2004, vol. 26, 1367-1372, https:llieeexplore,ieee.org/stamp/stamp.jsp?tp=&arnumber=1323804
- The influence of patch-delineation mismatches on multitemporal landscape pattern analysis. **JULIA LINKE et al.** LANDSCAPE ECOLOGY. KLUWER ACADEMIC PUBLISHERS, 05. November 2008, vol. 24, 157-170
- **L. P. CORDELLA ; P. FOGGIA ; C. SANSONE ; M. VENTO.** *An Improved Algorithm for Matching Large Graphs*
- **LUIGI P. CORDELLA ; PASQUALE FOGGIA ; CARLO SANSONE ; MARIO VENTO.** A (Sub)Graph Isomorphism Algorithm for Matching Large Graphs. *IEEE TRANSACTIONS ON PATTERN ANALYSIS AND MACHINE INTELLIGENCE,* Oktober 2004, vol. 26 (10
- **T. Y. ZHANG ; C. Y. SUEN.** A Fast Parallel Algorithm for Thinning Digital Patterns. *Communications of the ACM,* Marz 1984, vol. 27 (3